# EUROPEAN PATENT APPLICATION

(11) **EP 4 374 998 A1**
(43) Date of publication of application: **29.05.2024**
(21) Application number: 21951053.4
(22) Date of filing: 21.12.2021
(51) Int. Cl.: B23K 1/00, B23K 3/08, B23K 3/06, B23Q 7/04, B23K 35/02, B23K 31/12, B23K 11/30, B24B 27/033

(54) **BRAZING SYSTEM AND BRAZING METHOD**

(30) Priority: 23.07.2021 KR 20210097271
(71) Applicant: LS Electric Co., Ltd., Gyeonggi-do 14119 (KR)
(72) Inventor: KWON, Ki Jeong, Anyang-si, Gyeonggi-do 14118 (KR); KANG, Rae Suk, Anyang-si, Gyeonggi-do 14118 (KR)
(74) Representative: K&L Gates LLP
(86) International application number: PCT/KR2021/019490
(87) International publication number: WO 2023/003105

(57) **Abstract**

A brazing system according to an embodiment of the present invention, which is for brazing an object to be bonded to a base material, comprises: a turntable provided with a reception part for receiving the base material and rotatable clockwise or counterclockwise; a base material supply device for supplying the base material to the reception part; a brazing filler metal supply device for supplying a brazing filler metal to an upper side of the base material; a first heating device for bonding the brazing filler metal to the base material; a bonding object supply device for supplying the object to be bonded to an upper side of the brazing filler metal bonded to the base material; a second heating device which is in contact with opposite sides of the base material to fix the base material and is provided with electrodes for supplying electric current to the base material so as to bond the object to be bonded to the base material; and a cooling device which comes into contact with the object to be bonded to cool the object to be bonded.

## Description

### [Technical Field]

The present invention relates to a brazing system and a brazing method, and more specifically, to a brazing system and a brazing method for brazing an object to be bonded to a base material.

### [Background Art]

Brazing is one of the methods for bonding an bonding object to a base material, wherein instead of being bonded by melting the base material or the bonding object, the bonding object is bonded to the base material by supplying and melting a brazing filler metal, which melts at a temperature below the melting point of the base material or the bonding object, between the base metal and the bonding object.

Since such brazing bonds the base material and the bonding object to each other without melting the base material or the bonding object, the thermal effect on the base material or the bonding object can be minimized and thus, the characteristics of the base material or the bonding object can be maintained, so it is widely used.

However, in the conventional brazing method, when the temperature for heating the brazing filler metal is excessively high or the heating time is prolonged while brazing the base material or bonding object by heating the brazing filler metal, there is a problem in that the internal structure of the base metal or bonding object is destroyed.

Further, the conventional brazing method has a problem in that the bonding object is damaged in the process of heating the brazing filler metal by directly heating the bonding object.

In addition, due to the recent issue of climate change, the conventional brazing method requires a reduction in energy consumption and a reduction in process time in the overall process.

### [Disclosure]

### [Technical Problem]

The present invention is intended to solve the above problems and to provide a brazing system and a brazing method that prevent damage to a base material and a bonding object.

In addition, the present invention is intended to provide a brazing system and a brazing method that reduce process costs by reducing energy consumption and process time in the overall process.

The objects of the present invention are not limited to the above-mentioned objects, and other objects not mentioned will be clearly understood by those skilled in the art from the following description.

### [Technical Solution]

In order to solve the above problems, according to an embodiment of the present invention, a brazing system for brazing an object to be bonded to a base material is provided, which may include: a turntable provided with a reception part for receiving the base material and rotatable clockwise or counterclockwise; a base material supply device for supplying the base material to the reception part; a brazing filler metal supply device for supplying a brazing filler metal to an upper side of the base material; a first heating device for bonding the brazing filler metal to the base material; a bonding object supply device for supplying the object to be bonded to an upper side of the brazing filler metal bonded to the base material; a second heating device which is in contact with opposite sides of the base material to fix the base material and is provided with electrodes for supplying electric current to the base material so as to bond the object to be bonded to the base material; and a cooling device which comes into contact with the object to be bonded to cool the object to be bonded.

Here, the base material supply device may include: a base material supply housing for storing the base material; a first base material transfer part provided in the base material supply housing and moving the base material in a horizontal direction; and a second base material transfer part for gripping the base material to seat it in the reception part.

The brazing system may further include an inspection device located above the reception part and checking whether the base material is present in the reception part.

The brazing filler metal supply device may include: a brazing filler metal supply housing; a first brazing filler metal transfer part provided in the brazing filler metal supply housing and moving a brazing filler metal base material having a first length in a horizontal direction; a brazing filler metal providing part for cutting the brazing filler metal base material to provide the brazing filler metal having a second length smaller than the first length; and a second brazing filler metal transfer part for gripping the brazing filler metal to seat it on the base material.

The brazing filler metal supply device may further include a winding part around which the brazing filler metal base material is wound, wherein the winding part may be rotated so that the brazing filler metal base material is moved to the first brazing filler metal transfer part.

The first brazing filler metal transfer part may include: a first guide part for guiding the brazing filler metal base material while supporting the lower side thereof; a second guide part for guiding the brazing filler metal base material while contacting the upper side thereof; and a brazing filler metal driving part for providing driving force to move the brazing filler metal base material while contacting the brazing filler metal base material.

As the brazing filler metal driving part moves in a vertical direction, the brazing filler metal driving part can control the movement of the brazing filler metal base material.

The brazing filler metal providing part may include: a cutting moving part connected to the brazing filler metal supply housing and reciprocating in a direction perpendicular to the direction in which the brazing filler metal base material is moved; and a brazing filler metal cutting part connected to the cutting moving part and cutting the brazing filler metal base material, wherein as the cutting moving part moves the brazing filler metal cutting part, the brazing filler metal cutting part can be adjacent to or away from the brazing filler metal base material.

The second brazing filler metal transfer part may include: a brazing filler metal rotating part provided between the base material and the brazing filler metal supply housing and rotating clockwise or counterclockwise; and a brazing filler metal grip part connected to the brazing filler metal rotating part and gripping the brazing filler metal, wherein the brazing filler metal grip part can grip the brazing filler metal and seat it on the base material as the brazing filler metal rotating part rotates.

The bonding object supply device may include: a bonding object storage part that stores a plurality of bonding objects and is provided with a bonding object moving part for moving the plurality of bonding objects in a row; a bonding object reception part for accommodating at least one of the plurality of bonding objects moved in a row from the bonding object moving part; and a bonding object transfer part for gripping the bonding object in the bonding object reception part to seat it on the base material.

The bonding object reception part may include: a rotating plate having at least one accommodation groove corresponding to the bonding object and rotating clockwise or counterclockwise; and a bonding object guide part surrounding a portion of the outer peripheral surface of the rotating plate.

The bonding object guide part may include: a first opening connected to the bonding object moving part and guiding the bonding object to be accommodated in the accommodation groove; and a second opening for guiding the bonding object to be separated from the accommodation groove.

The bonding object transfer part may include: a bonding object rotating part provided between the base material and the bonding object guide part and rotating clockwise or counterclockwise; and a bonding object grip part connected to the bonding object rotating part and gripping the bonding object, wherein the bonding object grip part can grip the bonding object and seat it on the base material as the bonding object rotating part rotates.

The bonding object may include: a first layer containing silver (Ag) and carbon (C); and a second layer containing silver (Ag) and no carbon (C), and the bonding object transfer part can seat the bonding object on the base material so that the second layer faces the base material.

The device for supplying the bonding object for brazing may further include a vision inspection device for checking the first layer by irradiating light toward the bonding object.

In this case, a certain pattern is formed on one surface of the first layer of the bonding object, and the vision inspection device can check whether the certain pattern is present.

The second heating device may include: a first fixing part capable of contacting one side of the base material and provided with a first electrode; and a second fixing part capable of contacting the other side of the base material and provided with a second electrode electrically connected to the first electrode through the base material, wherein the inside of the first fixing part and the second fixing part may be provided with a first fluid passage through which fluid supplied from the outside moves, and a second fluid passage communicating with the first fluid passage to allow the fluid to flow and formed to surround the first fluid passage.

The brazing system may include an electrode grinding device for grinding the electrode by moving the second heating device.

Here, the electrode grinding device may include: a brazing transfer part for moving the second heating device in a horizontal direction; and a grinding part disposed to be spaced apart from the second heating device and grinding the electrode of the heating device as the second heating device is moved by the brazing transfer part.

The brazing transfer part may include: a guide rail; and a driving part coupled to the second heating device and providing driving force so that the second heating device moves along the guide rail.

The second heating device may further include a height adjustment part for adjusting the height of the electrode to correspond to the height of the grinding part.

The electrode may include: a first electrode contacting one side of the base material; and a second electrode contacting the other side of the base material, and the second heating device can be moved along the guide rail so that the grinding part is disposed between the first electrode and the second electrode.

The grinding part may include: a first grinding part for grinding the first electrode; and a second grinding part for grinding the second electrode, and the second heating device may include: a first horizontal moving part for moving the first electrode in a horizontal direction so that the first electrode contacts the first grinding part; and a second horizontal moving part for moving the second electrode in a horizontal direction so that the second electrode contacts the second grinding part.

The grinding part may be made of a cemented carbide material.

In addition, according to an embodiment of the present invention, a brazing method for brazing an object to be bonded to a base material is provided, which may include: a base material supply step of supplying the base material to a reception part for receiving the base material; a brazing filler metal supply step of supplying a brazing filler metal to the upper side of the base material; a brazing filler metal heating step of bonding the brazing filler metal to the base metal; a bonding object supply step of supplying the bonding object to an upper side of the brazing filler metal bonded to the base material; a base material heating step of bonding the bonding object to the base material by supplying current to the base material; and a cooling step of cooling the bonding object by contacting the bonding object.

Further, the brazing method may further include an electrode grinding step of grinding an electrode for heating the base material.

### [Advantageous Effects]

In the brazing system and brazing method according to an embodiment of the present invention, since the bonding object is not directly heated, and the brazing filler metal is indirectly heated by supplying current to the base metal, the temperature of the base metal and the bonding object can be prevented from excessively increasing.

In addition, as the cooling device contacts and cools the bonding object, the bonding object can be quickly cooled, thereby preventing the bonding object from being damaged.

In addition, since the brazing filler metal is seated on the base material by cutting the brazing filler metal base material, the brazing filler metal corresponding to various sizes of the base material and the bonding object can be provided, thereby reducing manufacturing costs.

Further, since the bonding object supply device stores a plurality of bonding objects and sequentially supplies the plurality of bonding objects to each reception part, the supply time of the bonding objects can be shortened, thereby reducing manufacturing costs.

In addition, as the electrode is ground, the heating temperature can be prevented from being excessively high or low due to foreign substances on the electrode, thereby preventing damage to the base material and the bonding object.

### [Description of Drawings]

FIG. 1 is a plan view schematically showing a brazing system according to an embodiment of the present invention.
FIG. 2 is a side view schematically showing a brazing system according to an embodiment of the present invention.
FIG. 3 is a diagram mainly showing the turntable of FIG. 1.
FIG. 4 is a view illustrating a process of manufacturing a brazing object using a brazing system according to an embodiment of the present invention.
FIG. 5 is a side view schematically showing a base material supply housing of a base material supply device according to an embodiment of the present invention.
FIG. 6 is a plan view schematically showing a base material supply housing of a base material supply device according to an embodiment of the present invention.
FIG. 7 is a plan view schematically showing a base material distribution part of a base material supply device according to an embodiment of the present invention.
FIG. 8 is a side view schematically showing a base material distribution part of a base material supply device according to an embodiment of the present invention.
FIG. 9 is a side view schematically showing a second base material transfer part of a base material supply device according to an embodiment of the present invention.
FIG. 10 is a front view schematically showing a second base material transfer part of a base material supply device according to an embodiment of the present invention.
FIG. 11 is a plan view schematically showing a second base material transfer part of a base material supply device according to an embodiment of the present invention.
FIG. 12 is a side view schematically showing a reception part according to an embodiment of the present invention.
FIG. 13 is a plan view schematically showing a reception part according to an embodiment of the present invention.
FIG. 14 is a view showing a state of a base material before being fixed to a reception part.
FIG. 15 is a diagram showing a state in which a base material is fixed to a reception part.
FIG. 16 is a diagram showing a state of checking whether a base material is accommodated in a reception part.
FIG. 17 is a plan view schematically showing a brazing filler metal supply device according to an embodiment of the present invention.
FIG. 18 is a side view schematically showing a brazing filler metal supply device according to an embodiment of the present invention.
FIG. 19 is a side view schematically showing a brazing filler metal supply housing of a brazing filler metal supply device according to an embodiment of the present invention.
FIG. 20 is a side view schematically showing a first heating device according to an embodiment of the present invention.
FIG. 21 is a diagram showing a state of checking a shape of a brazing filler metal on a base material.
FIG. 22 is a plan view schematically showing a bonding object supply device according to an embodiment of the present invention.
FIG. 23 is a side view schematically showing a bonding object transfer part of a bonding object supply device according to an embodiment of the present invention.
FIG. 24 is a diagram schematically showing a bonding object according to an embodiment of the present invention.
FIG. 25 is a side view schematically showing a second heating device according to an embodiment of the present invention.
FIG. 26 is a plan view schematically showing a second heating device according to an embodiment of the present invention.
FIG. 27 is a diagram schematically showing an interior of a second heating device according to an embodiment of the present invention.
FIG. 28 is a plan view showing an electrode of a second heating device according to an embodiment of the present invention.
FIG. 29 is a side view mainly showing a cooling device according to an embodiment of the present invention.
FIG. 30 is a front view mainly showing a cooling device according to an embodiment of the present invention.
FIG. 31 is a side view mainly showing an electrode grinding device according to an embodiment of the present invention.
FIG. 32 is a view mainly showing a grinding part of an electrode grinding device according to an embodiment of the present invention.
FIG. 33 is a side view schematically illustrating a state in which a second heating device is moved by a brazing transfer part according to an embodiment of the present invention.
FIG. 34 is a plan view schematically illustrating a state in which a second heating device is moved by a brazing transfer part according to an embodiment of the present invention.
FIG. 35 is a diagram showing a state of checking a bonding state of a bonding object on a base material.
FIG. 36 is a flowchart showing a brazing method according to an embodiment of the present invention.

100: brazing system
110: turntable
120: base material supply device
140: brazing filler metal supply device
147: first heating device
160: bonding object supply device
170: second heating device
175: cooling device

### [Detailed Description]

Hereinafter, various embodiments will be described in more detail with reference to the accompanying drawings. The embodiments according to the present invention may be modified in various ways. Specific embodiments may be depicted in the drawings and described in detail in the detailed description. However, the specific embodiments disclosed in the accompanying drawings are only intended to facilitate understanding of various embodiments. Accordingly, it should be understood that the technical idea is not limited by the specific embodiments disclosed in the accompanying drawings, and includes all equivalents or substitutes included in the spirit and technical scope of the invention.

Terms including an ordinal number, such as first, second, etc., may be used to describe various elements, but these elements are not limited by the terms. The above terms are used only for the purpose of distinguishing one component from another.

In the embodiments of the present invention, terms such as "comprise" or "have" are intended to designate that a feature, number, step, operation, component, part or combination thereof described in the embodiments of the present invention is present, but should not be construed to preclude the possibility of the presence or addition of one or more other features, numbers, steps, operations, components, parts or combinations thereof. When a component is referred to as being "connected" or "coupled" to another component, it should be understood that although they may be directly connected or coupled to each other, other components may exist in the middle. On the other hand, when a component is referred to as "directly connected" or "directly coupled" to another component, it should be understood that no other component exists in the middle.

Meanwhile, a "module" or "part" for a component used in an embodiment of the present invention performs at least one function or operation. In addition, the "module" or "part" may perform a function or operation by hardware, software, or a combination of hardware and software. Further, a plurality of "modules" or a plurality of "parts," excluding a "module" or "part" that must be performed on specific hardware or performed on at least one processor, may be integrated into at least one module. Singular expressions include plural expressions unless the context clearly implies otherwise.

Meanwhile, in the case of describing embodiments of the present invention, if it is determined that specific descriptions of related known functions or configurations may unnecessarily obscure the gist of the present invention, detailed descriptions thereof will be abbreviated or omitted.

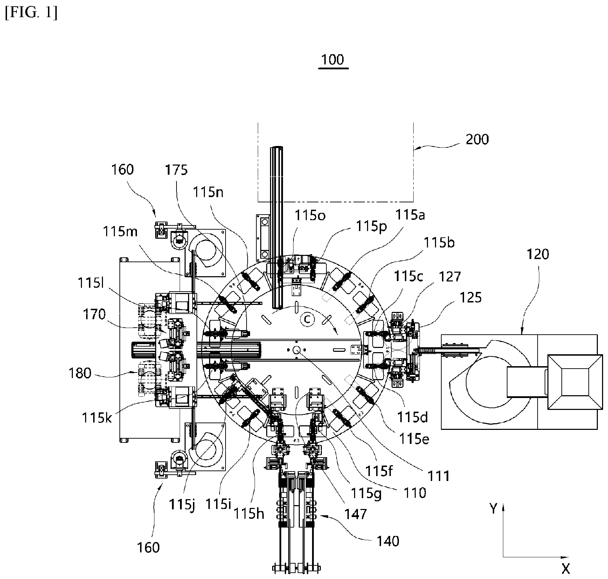

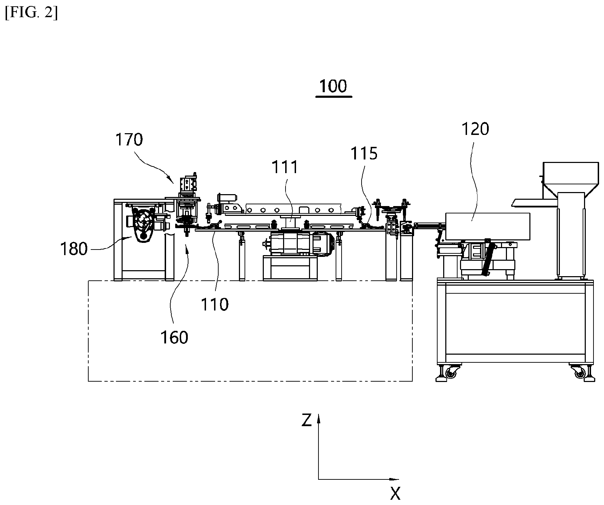

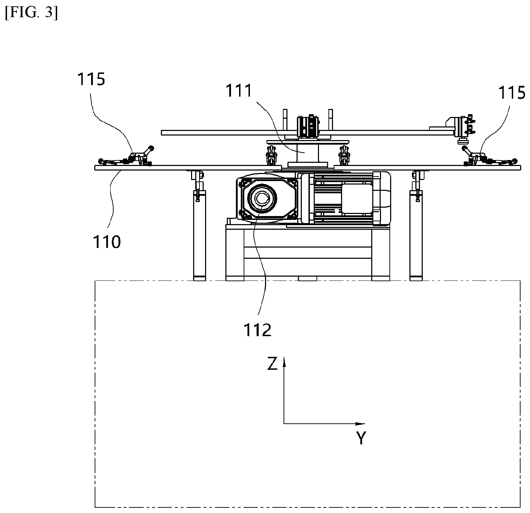

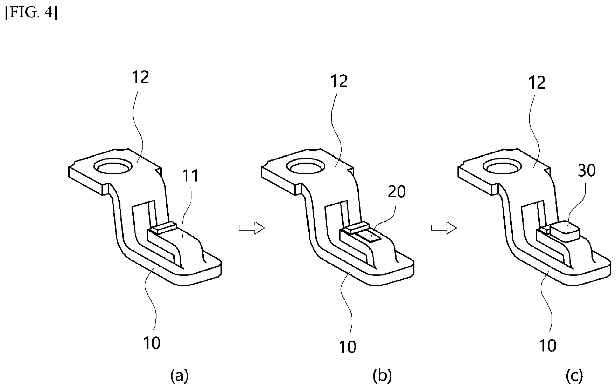

FIG. 1 is a plan view schematically showing a brazing system according to an embodiment of the present invention; FIG. 2 is a side view schematically showing a brazing system according to an embodiment of the present invention; FIG. 3 is a diagram mainly showing the turntable of FIG. 1; and FIG. 4 is a view illustrating a process of manufacturing a brazing object using a brazing system according to an embodiment of the present invention.

Referring to FIGS. 1 to 4, the brazing system 100 according to an embodiment of the present invention includes a turntable 110, a base material supply device 120, a brazing filler metal supply device 140, a first heating device 147, a bonding object supply device 160, a second heating device 170, and a cooling device 175. Here, the brazing system 100 manufactures a brazing object by bonding a base material 10 and a bonding object 30 using a brazing filler metal 20.

The turntable 110 has a disk shape. A rotation axis 111 is provided at the center of the turntable 110, and a driving part 112 for providing rotational force to the turntable 110 is provided below the turntable 110. The turntable 110 receives rotational force from the driving part 112 and rotates clockwise (^{©}) around the rotation axis 111.

In addition, a reception part 115 for accommodating the base material 10 is provided on the upper surface of the turntable 110.

The reception part 115 is configured in plural numbers along the circumference of the turntable 110. For example, the plurality of reception parts 115 include a first reception part 115a, a second reception part 115b arranged in parallel and spaced apart from the first reception part 115a, a third reception part 115c arranged in parallel and spaced apart from the second reception part 115b, a fourth reception part 115d arranged in parallel and spaced apart from the third reception part 115c, a fifth reception part 115e arranged in parallel and spaced apart from the fourth reception part 115d, a sixth reception part 115f arranged in parallel and spaced apart from the fifth reception part 115e, a seventh reception part 115g arranged in parallel and spaced apart from the sixth reception part 115f, an eighth reception part 115h arranged in parallel and spaced apart from the seventh reception part 115g, a ninth reception part 115i arranged in parallel and spaced apart from the eighth reception part 115h, a tenth reception part 115j arranged in parallel and spaced apart from the ninth reception part 115i, an eleventh reception part 115k arranged in parallel and spaced apart from the tenth reception part 115j, a twelfth reception part 1151 arranged in parallel and spaced apart from the eleventh reception part 115k, a thirteenth reception part 115m arranged in parallel and spaced apart from the twelfth reception part 1151, a 14th reception part 115n arranged in parallel and spaced apart from the 13th reception part 115m, a 15th reception part 115o arranged in parallel and spaced apart from the 14th reception part 115n, a 16th reception part 115p arranged in parallel and spaced apart from the 15th reception part 115o.

In this case, the turntable 110 rotates approximately 45° to change the positions of the plurality of reception parts 115 to perform each step of the brazing method to be described later.

Additionally, according to various embodiments of the present invention, the plurality of reception parts 115 are not limited to 16, but may be configured to be less than 16 or more than 16.

The base material supply device 120 is disposed to be spaced apart from the rotation axis 111 of the turntable 110 in the X-axis direction.

The brazing filler metal supply device 140 is disposed to be spaced apart from the rotation axis 111 of the turntable 110 in the Y-axis direction, and supplies the brazing filler metal 20 to the upper side of the base material 10. That is, the brazing filler metal 20 shown in FIG. 4(b) is seated on the upper side 11 of the base material 10 shown in FIG. 4(a).

The first heating device 147 is disposed above the reception part 115 between the rotation axis 111 of the turntable 110 and the brazing filler metal supply device 140. In addition, the first heating device 147 heats the brazing filler metal 20 to bond it to the base material 10.

The bonding object supply device 160 is disposed to be spaced apart from the turntable 110 and to be spaced apart from the brazing filler metal supply device 140. In addition, the brazing filler metal supply device 140 supplies the bonding object 30 to the upper side of the brazing filler metal 20 bonded to the base material 10.

The second heating device 170 is disposed on the opposite side of the base material supply device 120 with the rotation axis 111 of the turntable 110 interposed therebetween. The second heating device 170 moves along the X-axis.

The second heating device 170 is moved to the upper side of the reception part 115 and then contacts both sides of the base material 10 to fix the base material 10. In addition, the second heating device 170 heats the base material 10 to bond the bonding object 30 to the base material 10.

The cooling device 175 is disposed above the reception part 115 between the rotation axis 111 of the turntable 110 and the second heating device 170. Additionally, the cooling device 175 contacts and cools the bonding object 30.

Accordingly, the base material 10 is bonded to the bonding object 30, as shown in FIG. 4(b).

In addition, the brazing system 100 according to an embodiment of the present invention is provided with a pore inspection device 200 for inspecting pores of the internal tissues of the base material 10 and the bonding object 30. For example, the pore inspection device 200 can inspect the pores of the internal tissues of the base material 10 and the bonding object 30 using ultrasonic waves.

In addition, the components of the brazing system 100 will be described later with reference to the drawings.

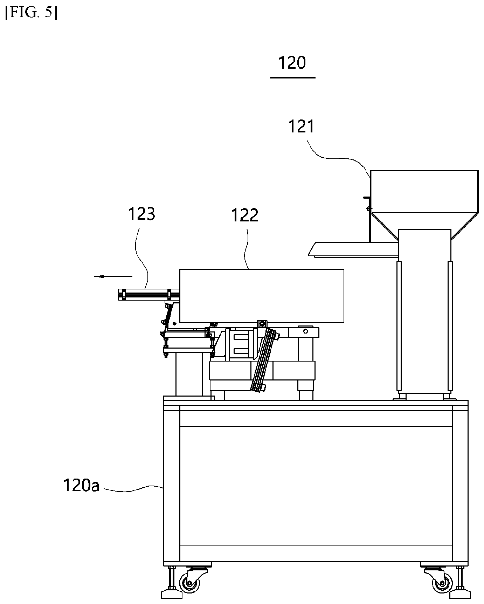

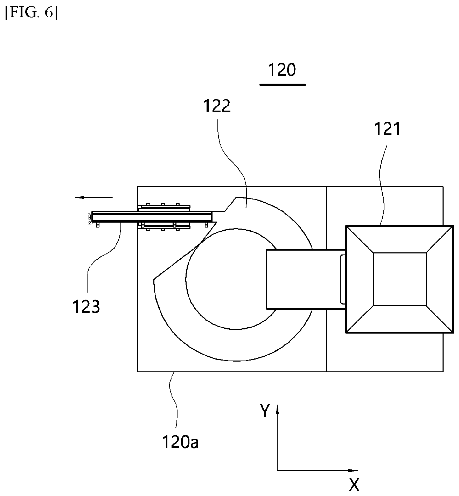

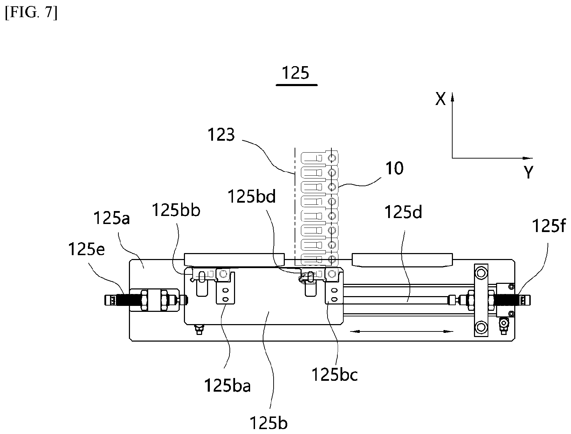

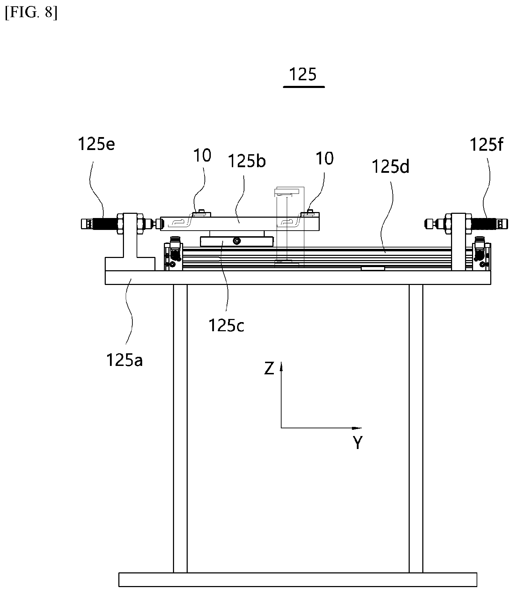

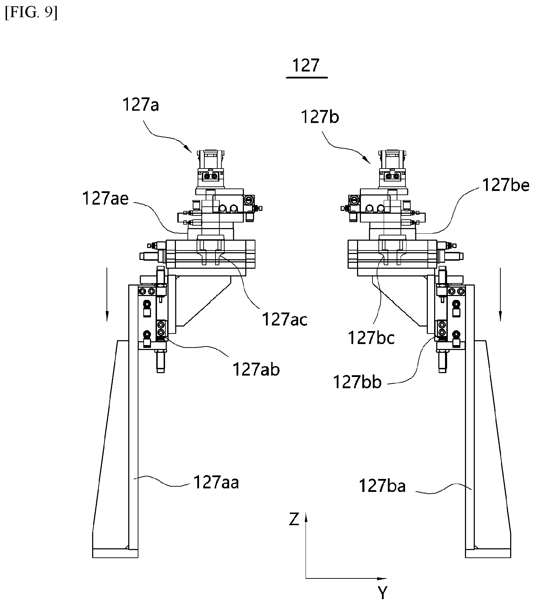

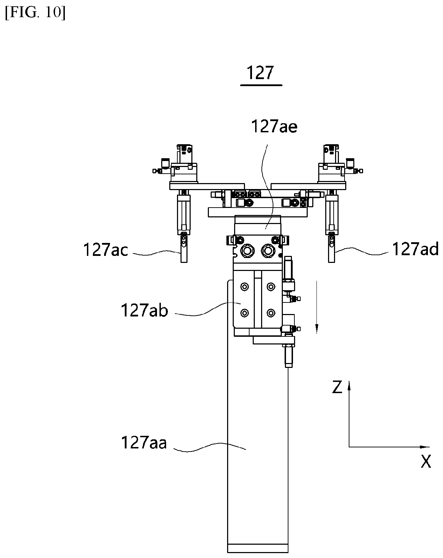

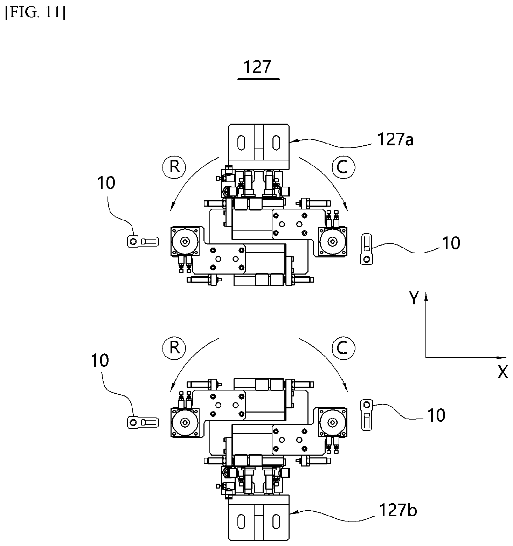

FIG. 5 is a side view schematically showing a base material supply housing of a base material supply device according to an embodiment of the present invention; FIG. 6 is a plan view schematically showing a base material supply housing of a base material supply device according to an embodiment of the present invention; FIG. 7 is a plan view schematically showing a base material distribution part of a base material supply device according to an embodiment of the present invention; FIG. 8 is a side view schematically showing a base material distribution part of a base material supply device according to an embodiment of the present invention; FIG. 9 is a side view schematically showing a second base material transfer part of a base material supply device according to an embodiment of the present invention; FIG. 10 is a front view schematically showing a second base material transfer part of a base material supply device according to an embodiment of the present invention; and FIG. 11 is a plan view schematically showing a second base material transfer part of a base material supply device according to an embodiment of the present invention.

Referring to FIGS. 5 to 11, the base material supply device 120 includes a base material supply housing 122, a first base material transfer part 123, a base material distribution part 125, and a second base material transfer part 127.

As shown in FIGS. 5 and 6, the base material supply housing 122 receives the base material 10 through a hopper 121 and stores it. A moving passage made of a curved surface is provided inside the base material supply housing 122. The base material 10 is moved along the moving passage by the force of falling from the hopper 121. In addition, a tray 120a for changing a position of the base material supply housing 122 while supporting it is provided under the base material supply housing 122.

As shown in FIGS. 5 and 6, the first base material transfer part 123 is provided in the base material supply housing 122 to be connected to the moving passage. The first base material transfer part 123 is provided to have a predetermined length in the X-axis direction toward the rotation axis 111 of the turntable. The base material 10 is moved in the X-axis direction through the first base material transfer part 123.

As shown in FIG. 7, the base material distribution part 125 is connected to the first base material transfer part 123. The base material distribution part 125 controls the supply time of the base material 10 so that the base material 10 continuously supplied through the first base material transfer part 123 is supplied to the reception part 115 (see FIG. 2) at a preset time. Here, the preset time is a time when the turntable 110 (see FIG. 1) rotates approximately 45°.

As shown in FIGS. 7 and 8, the base material distribution part 125 includes a body part 125a, a rail 125d, a driving part 125c, a moving part 125b, and mounting parts 125ba, 125bb, 125bc and 125bd.

The body part 125a is formed to have a predetermined length in the Y-axis direction, which is a direction perpendicular to the first base material transfer part 123.

The rail 124d is provided above the body part 125a.

The driving part 125c moves along the rail 124d. In this case, the driving part 125c is provided with an electric motor that receives power and provides driving force. However, the driving part 125c is not limited to the electric motor and may be a variety of driving devices that generate driving force.

The moving part 125b is coupled with the driving part 125c. The moving part 125b reciprocates along the rail 125d by the driving part 125c.

The mounting parts 125ba, 125bb, 125bc and 125bd) include first mounting parts 125ba and 125bb formed to surround the base material 10 in the moving part 125b, and second mounting parts 125bc and 125bd arranged to be spaced apart from the first mounting parts 125ba and 125bb.

As shown in FIG. 7, when the moving part 125b is moved in one direction, the base material 10 is mounted on the second mounting parts 125bc and 125cd from the first base material transfer part 123. In addition, when the moving part 125b is moved in the other direction opposite to the one direction, the base material 10 is caught on one surface of the moving part 125b, so that the base material 10 of the first base material transfer part 123 is not moved and stops.

In addition, when the moving part 125b is moved by a distance between the first mounting parts 125ba and 125bb and the second mounting parts 125bc and 125bd, the base material 10 is mounted on the first mounting parts 125ba and 125bb from the first base material transfer part 123.

The base material distribution part 125 is provided with stoppers 125e and 125f for limiting the movement of the moving part 125b. The stoppers 125e and 125f contact each of one side and the other side of the moving part 125b.

The second base material transfer part 127 grips the base material 10 mounted on the base material distribution part 125 and seats it in the reception part 115. As shown in FIGS. 9 to 11, the second base material transfer part 127 includes a first base material grip part 127a for gripping the base material 10 of the first mounting parts 125ba and 125bb, and a second base material grip part 127b for gripping the base material of the second mounting parts 125bc and 125bd.

The first base material grip part 127a includes: a first support part 127aa formed to have a predetermined length in the Z-axis direction, a first vertical moving part 127ab moving in the Z-axis direction along the first support part 127aa, a first tongs part 127ac for gripping the base material 10 of the first mounting part 125ba and 125bb, and a first rotating part 127ae for rotating the first tongs part 127ac clockwise (^{©}) or counterclockwise.

The second base material grip part 127b includes a second support part 127ba formed to have a predetermined length in the Z-axis direction, a second vertical moving part 127bb moving in the Z-axis direction along the second support part 127ba, a second tongs part 127bc for gripping the base material 10 of the second mounting part 125bc and 125bd, and a second rotating part 127be for rotating the second tongs part 127bc clockwise (^{©}) or counterclockwise.

When the first tongs part 127ac grips the base material 10, the first rotating part 127ac rotates the first tongs part 127ac and moves it to the upper side of the reception part 115. In addition, the first moving part 127ab moves the first tongs part 127ac downward and seats it in the reception part 115.

Likewise, when the second tongs part 127bc grips the base material 10, the second rotating part 127bc rotates the second tongs part 127bc to move it to the upper side of the reception part 115. In addition, the second moving part 127bb moves the second tongs part 127bc downward and seats it in the reception part 115.

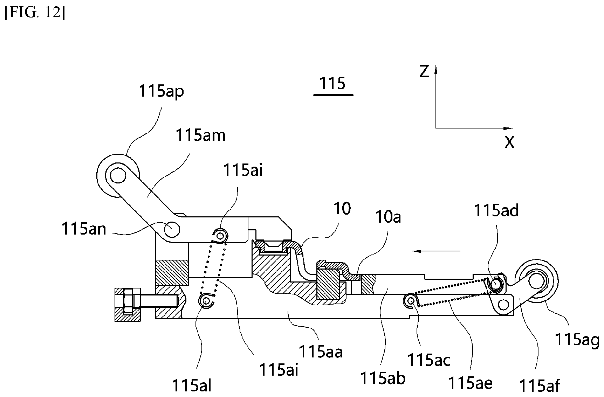

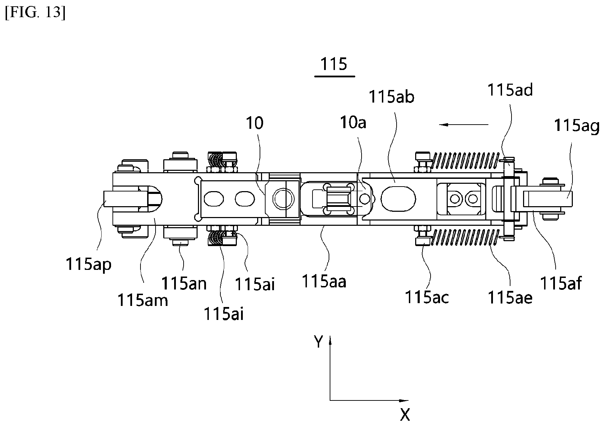

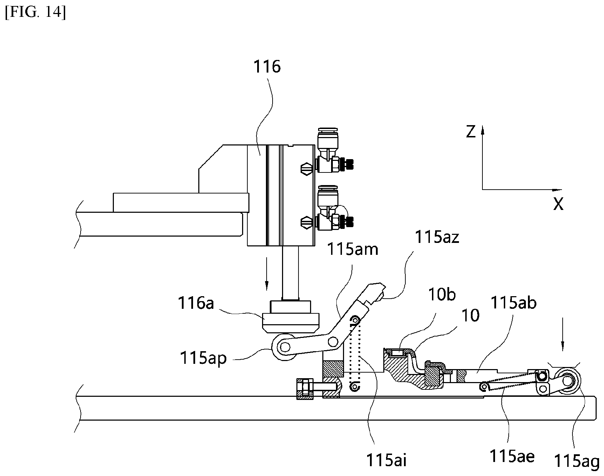

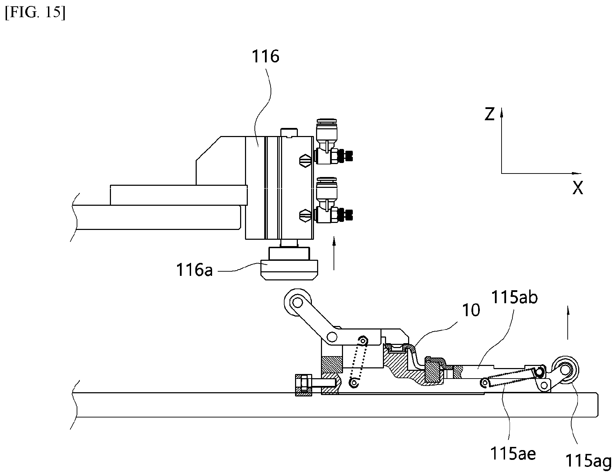

FIG. 12 is a side view schematically showing a reception part according to an embodiment of the present invention; FIG. 13 is a plan view schematically showing a reception part according to an embodiment of the present invention; FIG. 14 is a view showing a state of a base material before being fixed to the reception part; and FIG. 15 is a diagram showing a state in which a base material is fixed to a reception part.

Referring to FIGS. 12 to 15, the reception part 115 includes a body part 115aa, a first fixing part 115ab, a link 115af, and a second fixing part 115am.

The base material 10 is accommodated on the upper side of the body part 115aa. In this case, the upper side of the body part 115aa has a shape corresponding to the lower side of the base material 10.

The first fixing part 115ab reciprocates along the body part 115aa. In this case, the first fixing part 115ab presses and fixes one side 10a of the base material 10.

The link 115af is rotatably coupled to one side of the body part 115aa. One side of the link 115af is rotatably coupled to one side of the first fixing part 115ab. In this case, a first locking part 115ad is formed at one side of the link 115af, and a second locking part 115ac is formed at the body part 115aa to be spaced apart from one side thereof. Additionally, a spring 115ae is formed between the first locking part 115ad and the second locking part 115ac. As the spring 115ae pulls the first locking part 115ad and the second locking part 115ac to each other, the first fixing part 115ab presses one side 10a of the base material 10.

In addition, a first roller 115ag is provided on the other side of the link 115af.

As shown in FIG. 14, when the first roller 115ag pushes with a force greater than the elastic force of the spring 115ae in the downward direction, the link 115af is rotated. The first fixing part 115ab is moved in a direction away from the base material 10 by the rotation of the link 115af.

Conversely, as shown in FIG. 14, when the force pushed downward by the first roller 115ag is released, the spring 115ae pulls the first fixing part 115ab to pressurize the base material 10.

The second fixing part 115am is rotatably coupled to the rotation axis 115an formed on the other side of the body part 115aa.

One side 115az of the second fixing part 115am is formed to correspond to the shape of a portion 10b of the base material 10. One side 115az of the second fixing part 115am presses a portion 10b of the base material 10.

A third locking part 115ai is formed in the second fixing part 115am, and a fourth locking part 115al is formed in the body part 115aa. In addition, a second spring 115ai is provided between the third locking part 115ai and the fourth locking part 115al.

As the second spring 115al pulls one side of the second fixing part 115am, the second fixing part 115am presses the base material 10.

Additionally, a second roller 115ap is formed on the other side of the second fixing part 115am. In addition, a pressing part 116 is provided above the reception part 115.

The pressing part 116 includes a push part 116a for pushing the second roller 115ap. The push part 116a reciprocates along the Z-axis direction.

As the push part 116a pushes the second roller 115ap, the second fixing part 115am rotates and moves away from the base material 10. Accordingly, when the base material 10 is seated in the reception part 115, the push part 116a is released from pushing the second roller 115ap, and thus, the second fixing part 115am presses the base material 10.

Accordingly, the first fixing part 115ab and the second fixing part 115am fix the base material 10 to the reception part 115.

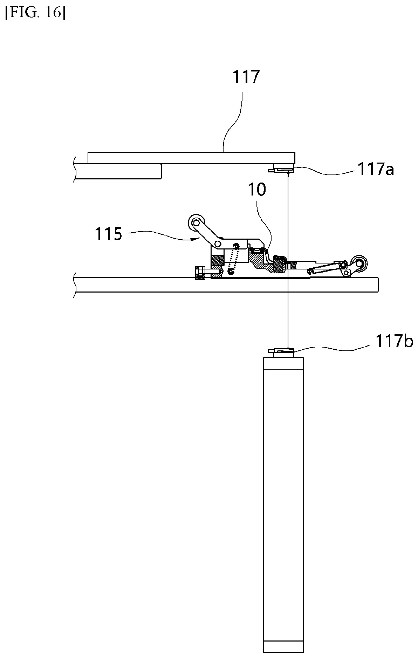

FIG. 16 is a diagram showing a state of checking whether a base material is accommodated in a reception part.

Referring to FIG. 16, the brazing system 100 (see FIG. 1) according to an embodiment of the present invention is equipped with an inspection device 117 for checking whether the base material 10 is present in the reception part 115.

The inspection device 117 is disposed between the base material supply device 120 (see FIG. 1) and the brazing filler metal supply device 140.

After the base material 10 is first accommodated in the reception part 115 by the base material supply device 120, the reception part 115 is located adjacent to the inspection device 117 by the rotation of the turntable 110 (see FIG. 1).

The inspection device 117 includes a light-emitting part 117a that irradiates light, and a light-receiving part 117b that receives light from the light-emitting part 117a. In addition, the reception part 115 is located between the light-emitting part 117a and the light-receiving part 117b.

In this case, when the light from the light emitting part 117a is irradiated in the downward direction, the base material 10 prevents the progress of the light, so that the light-receiving part 117b cannot receive the light. That is, when the light-receiving part 117b is unable to receive the light, it can be seen that the base material 10 is normally accommodated in the reception part 115. Conversely, when the light-receiving part 117b receives the light, it can be seen that the base material 10 is not accommodated in the reception part 115.

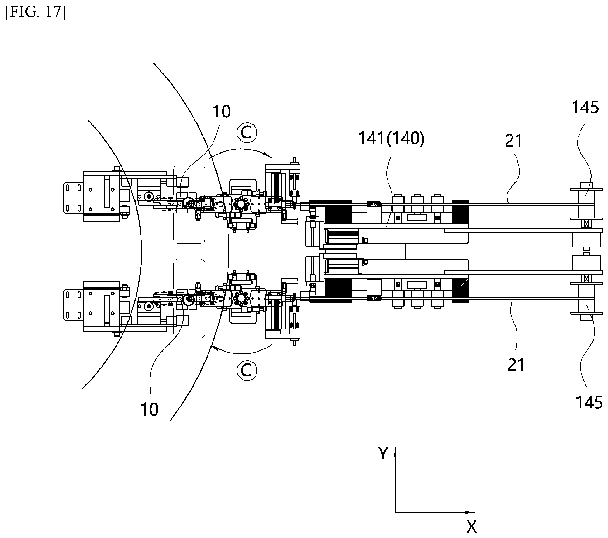

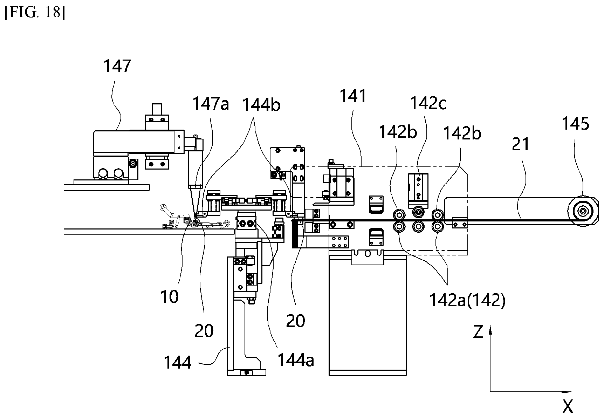

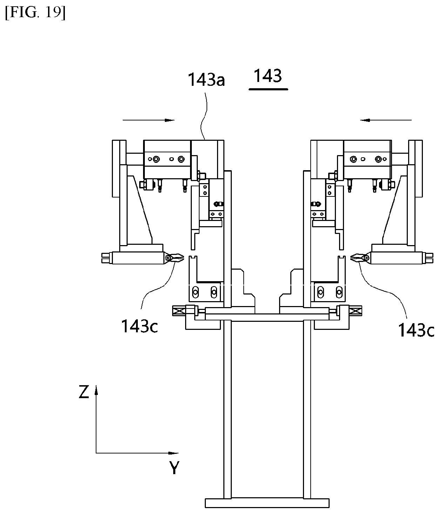

FIG. 17 is a plan view schematically showing a brazing filler metal supply device according to an embodiment of the present invention; FIG. 18 is a side view schematically showing a brazing filler metal supply device according to an embodiment of the present invention; and FIG. 19 is a side view schematically showing a brazing filler metal supply housing of a brazing filler metal supply device according to an embodiment of the present invention.

Referring to FIGS. 17 to 18, the brazing filler metal supply device 140 includes a winding part 145, a brazing filler metal supply housing 141, a first brazing filler metal transfer part 142, a brazing filler metal providing part 143, and a second brazing filler metal transfer part 144.

The winding part 145 is arranged to be spaced apart from the turntable. In addition, the winding part 145 has a cylindrical shape. The brazing filler metal base material 21 is wound around the winding part 145. As the winding part 145 rotates, the brazing filler metal base material 21 is separated from the winding part 145.

The brazing filler metal supply housing 141 is disposed between the turntable and the winding part 145.

The first brazing filler metal transfer part 142 is provided inside the brazing filler metal supply housing 141. The first brazing filler metal transfer part 142 receives the brazing filler metal base material 21 from the winding part 145.

The first brazing filler metal transfer part 142 includes: a first guide part 142a for guiding the brazing filler metal base material 21 while supporting the lower side thereof; a second guide part 142c for guiding the brazing filler metal base material 21 while contacting the upper side thereof; and a brazing filler metal driving part 142c for providing driving force to move the brazing filler metal base material 21 while contacting the brazing filler metal base material 21.

The first guide part 142a and the second guide part 142b are formed in the form of rollers. The brazing filler metal base material 21 is moved between the first guide part 142a and the second guide part 142b. Accordingly, the brazing filler metal base material 21 has a first length greater than the width of the brazing filler metal supply housing 141 and is stably transferred inside the brazing filler metal supply housing 141.

The brazing filler metal driving part 142c moves in a vertical direction, which is the Z-axis direction. When the brazing filler metal driving part 142c moves downward and is driven in contact with the brazing filler metal base material 21, the brazing filler metal base material 21 is moved. Conversely, when the brazing filler metal driving part 142c moves upward, it becomes separated from the brazing filler metal base material 21, so that the brazing filler metal driving part 142c can stop the movement of the brazing filler metal base material 21.

The brazing filler metal providing part 143 is disposed between the brazing filler metal supply housing 141 and the turntable 110, and is connected to the brazing filler metal supply housing 141. In addition, the brazing filler metal providing part 143 cuts the brazing filler metal base material 21 to provide brazing filler metal 20 having a second length smaller than the first length.

The brazing filler metal providing part 143 includes a cutting moving part 143a and a brazing filler metal cutting part 143c.

The cutting moving part 143a is connected to the brazing filler metal supply housing 141 and reciprocates in a direction perpendicular to the direction in which the brazing filler metal base material 21 is moved.

The brazing filler metal cutting part 143c is connected to the cutting moving part 143a and cuts the brazing filler metal base material 21. For example, the brazing filler metal cutting part 143c is formed in the form of scissors, as shown in FIG. 19. However, the brazing filler metal cutting part 143c is not limited to being formed in the form of scissors, and may be formed in various forms of cutting the brazing filler metal base material 21.

In addition, as the cutting moving part 143a reciprocates the brazing filler metal cutting part 143c in the Y-axis direction, the brazing filler metal cutting part 143c becomes adjacent to or away from the brazing filler metal base material 21. That is, according to the reciprocating movement time of the brazing filler metal cutting part 143c, the brazing filler metal cutting part 143c adjusts the length of the brazing filler metal 20.

As shown in FIG. 18, the second brazing filler metal transfer part 144 includes a brazing filler metal rotating part 144a and a brazing filler metal grip part 144b.

The brazing filler metal rotating part 144a is provided between the base material 10 and the brazing filler metal supply housing 141 and rotates clockwise (ⓒ) or counterclockwise.

The brazing filler metal grip part 144b is connected to the brazing filler metal rotating part 144a and grips the brazing filler metal 20.

In addition, as the brazing filler metal rotating part 144a rotates, the brazing filler metal grip part 144b grips the brazing filler metal 20 from the brazing filler metal providing part 143 and seats it on the base material 10.

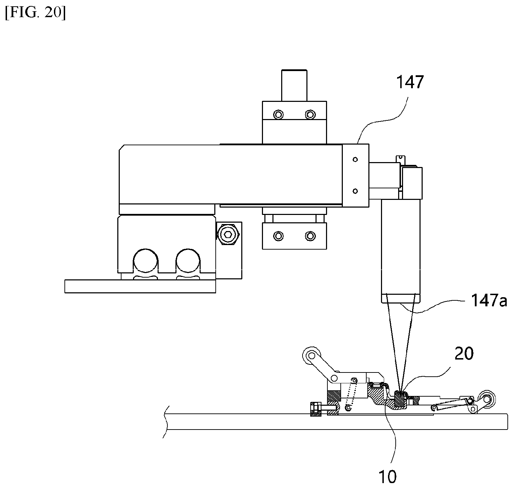

FIG. 20 is a side view schematically showing a first heating device according to an embodiment of the present invention.

Referring to FIG. 20, the first heating device 147 is disposed to be spaced upward from the base material 10.

The first heating device 147 heats the brazing filler metal 20 to bond it to the base material 10. For example, the first heating device 147 may be a device using a laser. In this case, laser light is irradiated toward the brazing filler metal 20 from one side 147a of the first heating device 147. In this way, as the first heating device 147 heats the brazing filler metal 20 using a laser, the irradiation of the laser onto the base material 10 is minimized to prevent the base metal 10 from being damaged by heat.

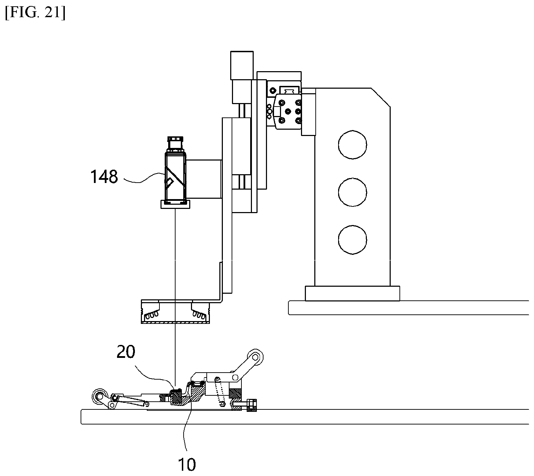

FIG. 21 is a diagram showing a state of checking a shape of a brazing filler metal on a base material.

Referring to FIG. 21, the brazing system 100 (see FIG. 1) according to an embodiment of the present invention is equipped with an inspection device 148 for checking the state of the brazing filler metal 20 in the base material 10.

The inspection device 148 is disposed between the first heating device 147 (see FIG. 1) and the cooling device 175 (see FIG. 1).

After the brazing filler metal 20 is first bonded to the base material 10 by the first heating device 147, the reception part 115 is located adjacent to the inspection device 117 by the rotation of the turntable 110 (see FIG. 1).

Additionally, the inspection device 148 may be a photographing device using a camera sensor. The inspection device 148 photographs the state of the brazing filler metal 20 and checks whether the brazing filler metal 20 is properly bonded to the base material 10. In addition, the inspection device 148 stores the image of the brazing filler metal 20 as image data, and the image data of the brazing filler metal 20 is used to control the brazing filler metal supply device 140 and the first heating device 147.

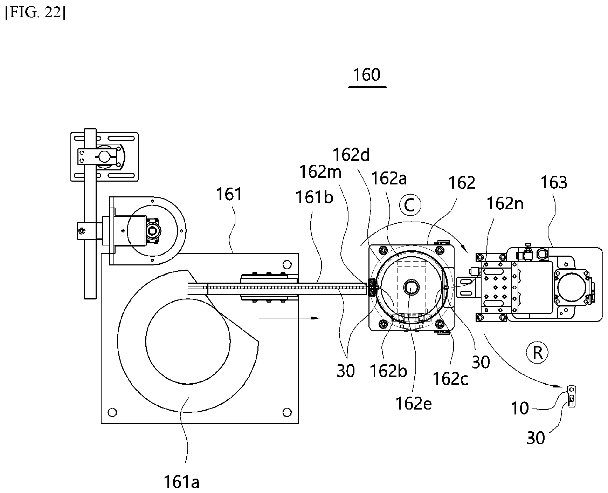

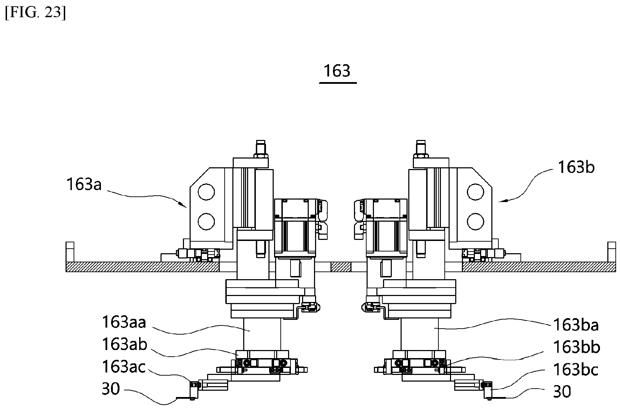

FIG. 22 is a plan view schematically showing a bonding object supply device according to an embodiment of the present invention; and FIG. 23 is a side view schematically showing a bonding object transfer part of a bonding object supply device according to an embodiment of the present invention.

Referring to FIGS. 22 and 23, the bonding object supply device 160 includes a bonding object storage part 161, a bonding object reception part 162, and a bonding object transfer part 163.

The bonding object storage part 161 is provided with a storage space 161a in which a plurality of bonding objects 30 are stored. In addition, the bonding object storage part 161 is provided with a bonding object moving part 161b in which the plurality of bonding objects 30 in the storage space 161a are moved in a row.

The bonding object reception part 162 is connected to the bonding object moving part 161b. In addition, the bonding object reception part 162 accommodates at least one of the plurality of bonding objects 30 that are moved in a row from the bonding object moving part.

The bonding object reception part 162 includes a rotating plate 162a and a bonding object guide part 162d.

The rotation plate 162a has a disk shape and rotates clockwise (ⓒ) or counterclockwise about the rotation axis 162e. In addition, the rotation plate 162a is provided with at least one accommodation groove 162b or 162c corresponding to the bonding object 30. The at least one accommodation groove 162b or 162c includes a first accommodation groove 162b in which the bonding object 30 is accommodated, and a second accommodation groove 162b formed on the opposite side of the first accommodation groove 162b with the rotation axis 162e interposed therebetween.

Accordingly, the bonding object of the bonding object moving part 161b is received in the accommodation grooves 162b and 162c when the rotation plate 162a rotates 180°.

The bonding object guide part 162d surrounds a portion of the outer peripheral surface of the rotation plate 162a. Accordingly, the bonding object 30 accommodated in the accommodation grooves 162b and 162c is prevented from being separated to the outside by the bonding object guide part 162d when the rotation plate 162a rotates.

The bonding object guide part 162d includes a first opening 162m for guiding the bonding object 30 to be accommodated in the accommodation grooves 162b and 162c, and a second opening 162n disposed on the opposite side of the first opening 162m with the rotation axis 162e interposed therebetween.

The first opening 162m is connected to the bonding object moving part 161b. The bonding object 30 of the bonding object moving part 161b is received in the accommodation grooves 162b and 162c through the first opening 162m as the rotation plate 162a rotates. When the accommodation grooves 162b and 162c deviate from the position corresponding to the first opening 162m according to the rotation of the rotation plate 162a, the bonding object 30 of the bonding object moving part 161b is maintained in contact with the outer peripheral surface of the rotation plate 162a.

The second opening 162n guides the bonding object 30 to be separated from the accommodation grooves 162b and 162c. Meanwhile, when the accommodation grooves 162b and 162c are placed in the position corresponding to the second opening 162n according to the rotation of the rotation plate 162a, the bonding object 30 of the accommodation grooves 162b and 162c is moved to the second opening 162n by the rotational force of the rotation plate 162a.

The bonding object transfer part 163 grips the bonding object 30 of the bonding object reception part 162 and seats it on the base material 10.

Meanwhile, the bonding object supply device 160 is configured as a pair, and the pair of bonding object supply devices are arranged symmetrically to each other.

As shown in FIG. 23, the bonding object transfer part 163 includes a first bonding object transfer part 163a for gripping one of the bonding object 30 in the pair of bonding object reception parts, and a second bonding object transfer part 163b for gripping the other bonding object 30 in the pair of bonding object reception parts.

The first bonding object transfer part 163a includes a first bonding object rotation part 163ab that rotates clockwise or counterclockwise along the rotation axis 163aa, and a first bonding object grip part 163ac connected to the bonding object rotation part 163ab.

The first bonding object rotation part 163ab is provided between the base material 10 and the bonding obj ect guide part 162n. In addition, the first bonding object rotation part 163ab may be moved in a vertical direction along the rotation axis 163aa.

The first bonding object grip part 163ac grips the bonding object 30 located in the second opening 162n. That is, as the bonding object rotation part 163ab rotates, the bonding object grip part 163ac grips the bonding object 30 and seats it on the base material 10.

The second bonding object transfer part 163b includes a second bonding object rotation part 163bb that rotates clockwise or counterclockwise along the rotation axis 163ba, and a second bonding object grip part 163bc connected to the bonding object rotation part 163bb.

The second bonding object rotation part 163bb may be moved in a vertical direction along the rotation axis 163ba.

As the bonding object rotation part 163bb rotates, the bonding object grip part 163bc grips the bonding object 30 and seats it on the base material 10.

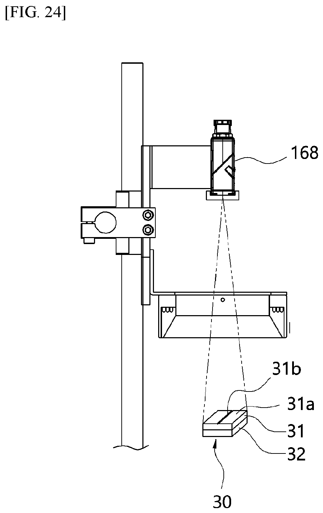

FIG. 24 is a diagram schematically showing a bonding object according to an embodiment of the present invention.

Referring to FIG. 24, the bonding object 30 is configured to have a first layer 31 and a second layer 32.

The first layer 31 contains silver (Ag) and carbon (C). As the first layer 31 contains carbon (C), the electrical conductivity and thermal conductivity of the first layer 31 are improved.

The second layer 32 contains silver (Ag) and does not contain carbon (C).

The bonding object transfer part 163 seats the bonding object 30 on the base material 10 so that the second layer 32 faces the base material 10. As the second layer 32 does not contain carbon (C), carbon (C) is prevented from being supplied into the base material 10 during the bonding process with the base material 10.

To this end, the brazing system 100 is provided with a vision inspection device 168 for irradiating light toward the bonding object 30 to check the first layer.

A certain pattern 31b is formed on the upper surface 31a of the first layer 31. The certain pattern 31b may be formed in a line shape or in various other shapes.

The vision inspection device 168 checks whether the certain pattern 31b is present and whether the second layer 32 faces the base material 10. Accordingly, the vision inspection device 168 prevents the first layer 31 from being bonded to the base material 10 by the bonding object transfer part 163.

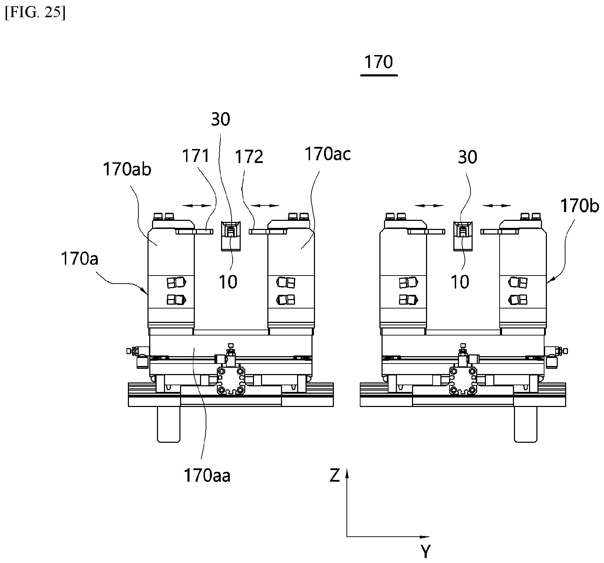

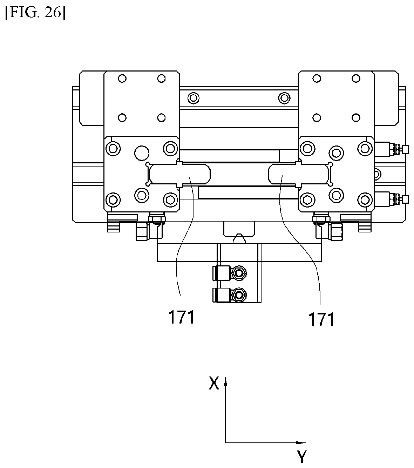

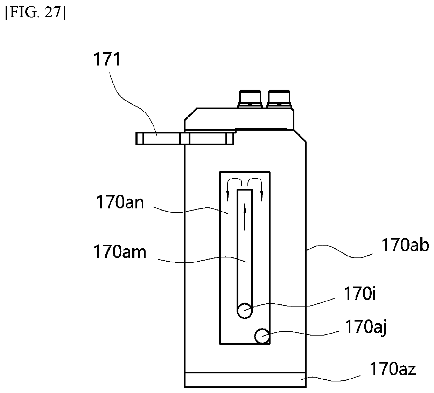

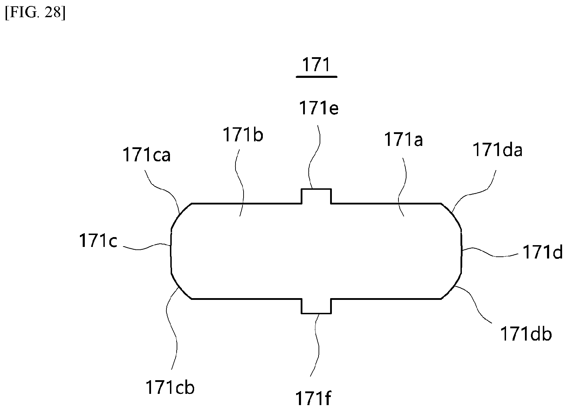

FIG. 25 is a side view schematically showing a second heating device according to an embodiment of the present invention; FIG. 26 is a plan view schematically showing a second heating device according to an embodiment of the present invention; FIG. 27 is a diagram schematically showing an interior of a second heating device according to an embodiment of the present invention; and FIG. 28 is a plan view showing an electrode of a second heating device according to an embodiment of the present invention.

Referring to FIGS. 25 to 28, the second heating device 170 includes a first brazing part 170a and a second brazing part 170b. Accordingly, the second heating device 170 simultaneously brazes a pair of base materials 10 and a pair of bonding objects 30.

The second heating device 170 includes a first heating body part 170aa, a first fixing part 170ab provided with a first electrode 171, and a second fixing part 170ac provided with a second electrode 172.

The first electrode 171 is coupled to the upper side of the first fixing part 170ab and contacts one side of the base material 10.

The first fixing part 170ab reciprocates in the Y-axis direction on the first heating body part 170aa. Accordingly, as the first fixing part 170ab reciprocates, the first electrode 171 contacts one side of the base material 10 or is separated from the base material 10.

The second electrode 172 is coupled to the upper side of the second fixing part 170ac and contacts the other side of the base material 10. In addition, the first electrode 171 and the second electrode 172 are provided to allow current to flow through the base material 10, and the base material 10 is heated by the first electrode 171 and the second electrode 172.

The second fixing part 170ac reciprocates in the Y-axis direction on the first heating body part 170aa. Accordingly, as the second fixing part 170ac reciprocates, the second electrode 172 contacts the other side of the base material 10 or is separated from the base material 10.

The second fixing part 170ac is moved in a direction opposite to the moving direction of the first fixing part 170ab. That is, the first fixing part 170ab and the second fixing part 170ac are moved to be close to or away from each other.

In addition, the inside of the first fixing part 170ab and the second fixing part 170ab is provided with a first fluid passage 170am through which a fluid supplied from the outside moves, and a second fluid passage 170an communicating with the first fluid passage 170am to allow the fluid to flow therethrough.

The fluid is supplied from the outside to the first fluid passage 170am through an inlet 170i. The inlet 170i is provided below the first fluid passage 170am. The fluid supplied through the inlet 170i is moved upward along the first fluid passage 170am by the force with which the fluid is supplied.

The second fluid passage 170an is formed to surround the first fluid passage 170am. In addition, the second fluid passage 170an communicates with the upper side of the first fluid passage 170am. Accordingly, the fluid passing through the first fluid passage 170am moves downward in the direction of gravity along the second fluid passage 170an. In this case, the upper side of the second fluid passage 170an is located adjacent to the electrode 171, and the heat heated by the electrode 171 is cooled by the fluid. Accordingly, the fluid prevents the first fixing part 170ab and the second fixing part 170ac from being damaged by heat.

The fluid moved through the second fluid passage 170an is discharged to the outside through an outlet 170aj.

Meanwhile, the lower side of the first fixing part 170ab is provided with an insulating part 170az that is electrically insulated from the first heating body part 170aa.

Accordingly, the insulating part 170az prevents the current flowing through the electrode 171 from being supplied to the first heating body part 170aa, thereby preventing safety accidents.

According to an embodiment of the present invention, the second electrode 172 has the same shape as the first electrode 171.

The first electrode 171 includes a first electrode body part 171a and a second electrode body part 171b extending from the first electrode body part 171a.

The second electrode body part 171b is formed symmetrically with the first electrode body part 171a.

A first locking part 171e and a second locking part 171f are formed to protrude between the first electrode body part 171a and the second electrode body part 171b. The second locking part 171f is formed symmetrically with the first locking part 171e. The first locking part 171e and the second locking part 171f are provided so that the first electrode 171 is caught in a groove formed in the first fixing part 171ab.

The first electrode body part 171a is formed with a first contact surface 171d which is in contact with the base material 10. In addition, the first electrode body part 171a is provided with a first curved part 171da and a second curved part 171db extending from the first contact surface 171d.

The first curved part 171da and the second curved part 171db do not contact the base material 10, so that after the first electrode 171 heats the base material 10, the first electrode 171 is smoothly separated from the base material 10.

The second electrode body part 171b is formed with a second contact surface 171c which is in contact with the base material 10. In addition, the second electrode body part 171c is provided with a third curved part 171ca and a fourth curved part 171cb extending from the first contact surface 171c.

Meanwhile, when the first electrode body 171a contacts the base material 10, the second electrode body 171b is inserted into and fixed to the groove of the first heating body 170ab.

When the first electrode body 171a undergoes multiple heating processes, foreign substances may attach to the first electrode body 171a, thereby reducing heating efficiency.

To solve this problem, after the first electrode 171 is separated from the first heating body part 170ab, when the first electrode body part 171a is inserted into the groove of the first heating body part 170ab, the second electrode body part 171b contacts the base material 10. That is, since the first electrode body part 171a and the second electrode body part 171b are formed symmetrically, the first electrode body part 171a and the second electrode body part 171b may be selectively used according to the state of the first electrode body part 171a and the second electrode body part 171b.

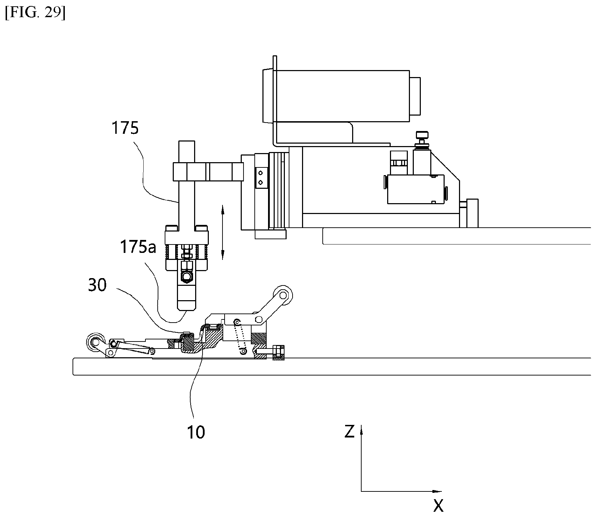

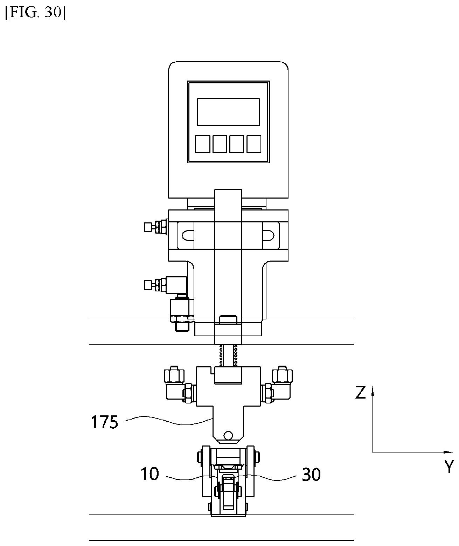

FIG. 29 is a side view mainly showing a cooling device according to an embodiment of the present invention; and FIG. 30 is a front view mainly showing a cooling device according to an embodiment of the present invention.

Referring to FIGS. 29 and 30, the cooling device 175 cools the bonding object 30 heated by the second heating device 170.

The cooling device 175 is disposed above the bonding object 30 bonded to the base material 10. The cooling device 175 is provided to circulate a refrigerant from the outside. However, the cooling device 175 is not limited to using a refrigerant, and may be operated in various ways, such as a method of cooling using a semiconductor.

In addition, the cooling device 175 is provided such that one side 175a of the cooling device 175 reciprocates along the Z-axis direction. When the second heating device 170 heats the base material 10, the cooling device 175 is moved upward to be away from the bonding object 30. When the second heating device 170 completes the process of heating the base material 10, the cooling device 175 is moved downward to come into contact with the bonding object 30.

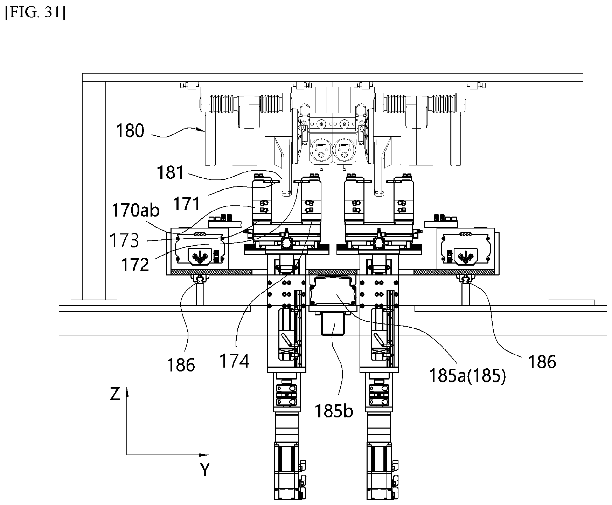

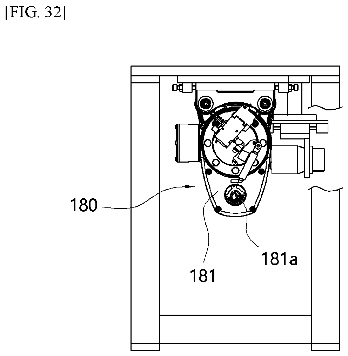

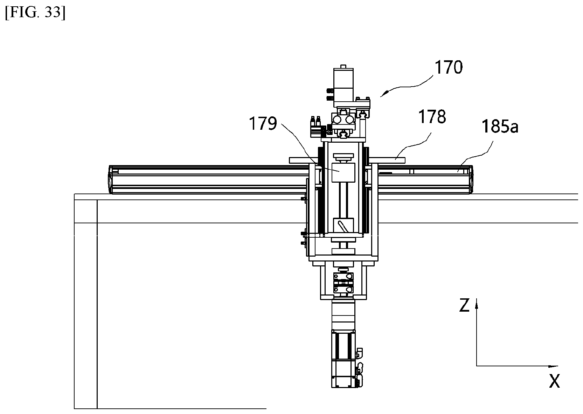

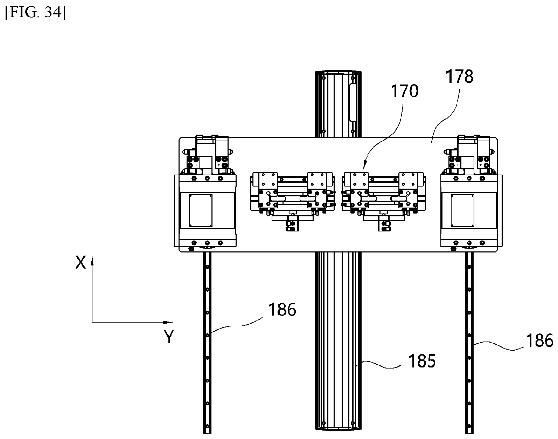

FIG. 31 is a side view mainly showing an electrode grinding device according to an embodiment of the present invention; FIG. 32 is a view mainly showing a grinding part of an electrode grinding device according to an embodiment of the present invention; FIG. 33 is a side view schematically illustrating a state in which a second heating device is moved by a brazing transfer part according to an embodiment of the present invention; and FIG. 34 is a plan view schematically illustrating a state in which a second heating device is moved by a brazing transfer part according to an embodiment of the present invention.

Referring to FIGS. 31 to 34, the electrode grinding device 180 includes a brazing transfer part 185 for moving the second heating device 170 in the horizontal direction (X-axis), and a grinding part 181 arranged to be spaced apart from the turntable 110.

The brazing transfer part 185 includes a guide rail 185a and a driving part 185b.

The guide rail 185a extends from the grinding part 181 toward the rotation axis 111 of the turntable 110. The guide rail 185a is disposed below the bonding object supply device 160.

The driving part 185b is coupled to the second heating device 170 and provides driving force so that the second heating device 170 moves along the guide rail 185a. The driving part 185b operates in a linear driving manner. However, the driving part 185b is not limited to the linear driving manner, and may be operated in various driving methods, such as a motor that provides driving force to the second heating device 170.

Accordingly, the second heating device 170 is moved along the guide rail 185a below the bonding object supply device 160 so as not to interfere with the bonding object supply device 160.

Additionally, the second heating device 170 is provided with a plate 178 mounted on the guide rail 185a.

The brazing transfer part 185 is provided with an auxiliary guide rail 186 for guiding the plate 178 while supporting both sides thereof. Accordingly, the second heating device 170 is prevented from leaving the guide rail 185a while moving along the guide rail 185a.

Additionally, the second heating device 170 is provided with a height adjustment part 179 for adjusting the height of the electrode 171 to correspond to the height of the grinding part 181.

The height adjustment part 179 is driven hydraulically to move the electrode 171 along the Z-axis direction. However, the height adjustment part 179 is not limited to being driven hydraulically, and may be driven in a variety of ways, such as an electric motor method.

In addition, the heating device 170 is moved along the guide rail 185a so that the grinding part 181 is disposed between the first electrode 171 and the second electrode 172.

The grinding part 181 includes a first grinding part 181a for grinding the first electrode 171, and a second grinding part (not shown) for grinding the second electrode 172.

The first grinding part 181a grinds the first electrode 171 while rotating clockwise or counterclockwise.

The second grinding part is disposed on the opposite side of the first grinding part 181a and rotates together with the first grinding part 181a.

In addition, the heating device 170 includes a first horizontal moving part 173 for moving the first electrode 171 in the horizontal direction, and a second horizontal moving part 174 for moving the second electrode 172 in the horizontal direction.

The first horizontal moving part 173 moves the first electrode 171 to contact the first grinding part 181a.

The second horizontal moving part 174 moves the second electrode 172 to contact the second grinding part.

The grinding part 181 is made of a cemented carbide material. For example, the cemented carbide contains one of Mo, Cu and Cr.

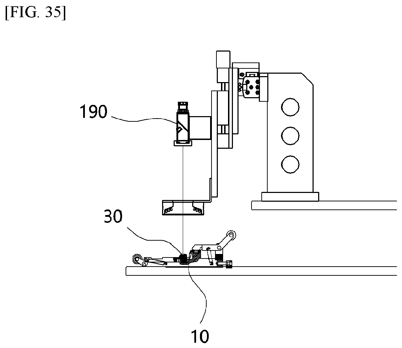

FIG. 35 is a diagram showing a state of checking a bonding state of a bonding object on a base material.

Referring to FIG. 35, the brazing system 100 (see FIG. 1) according to an embodiment of the present invention is equipped with an inspection device 190 for checking the bonding state of the bonding object 30 on the base material 10.

The inspection device 190 is disposed between the cooling device 175 and the pore inspection device 200.

The inspection device 190 may be a photographing device using a camera sensor. The inspection device 190 photographs the bonding state of the bonding object 30 and checks whether the bonding object 30 is properly bonded to the base material 10. In addition, the inspection device 190 stores the bonding state of the bonding object 30 as image data, and the image data of the bonding object 30 is used to control the bonding object supply device 160 and the second heating device 170.

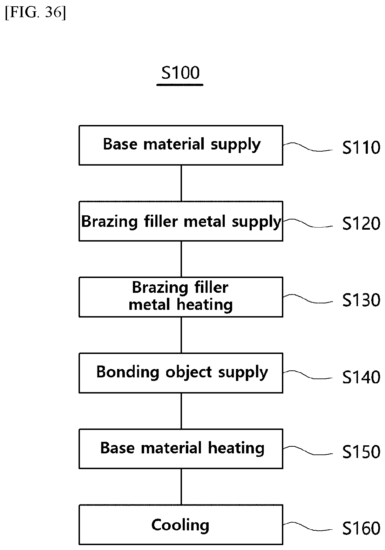

FIG. 36 is a flowchart showing a brazing method according to an embodiment of the present invention.

Referring to FIG. 36, the brazing method (S100) includes a base material supply step (S110), a brazing filler metal supply step (S120), a brazing filler metal heating step (S130), a bonding object supply step (S140), a base material heating step (S150), and a cooling step (S160).

In the base material supply step (S110), the base material is supplied to a reception part for accommodating the base material. Here, the reception part is configured as a pair, and is provided on the turntable. As the turntable rotates, a pair of base materials are simultaneously supplied to the pair of reception parts.

In the brazing filler metal supply step (S120), a brazing filler metal is supplied to the upper side of the base material. A pair of brazing filler metals are supplied simultaneously to the upper side of a pair of base metals.

In the brazing filler metal heating step (S130), the brazing filler metal is bonded to the base material. In this case, a pair of brazing filler metals are simultaneously bonded to a pair of base metals.

In the bonding object supply step (S140), the bonding object is supplied to the upper side of the brazing filler metal bonded to the base material. In this case, a pair of bonding objects are simultaneously supplied to the upper side of a pair of brazing filler metals.

In the base material heating step (S150), current is supplied to the base material to bond the bonding object to the base material. In this case, the pair of base materials are heated simultaneously, so that the pair of base materials and the pair of bonding objects are bonded.

In the cooling step (S 160), the bonding object is cooled. In this case, a pair of bonding objects are cooled simultaneously.

The base material supply step (S 110), the brazing filler metal supply step (S120), the brazing filler metal heating step (S130), the bonding object supply step (S140), the base material heating step (S150), and the cooling step (S160) are performed simultaneously to shorten the manufacturing time of the brazing object.

In addition, the brazing method (S100) further includes an electrode grinding step of grinding an electrode for heating the base material. In the electrode grinding step, impurities attached to the electrode are removed.

Although preferred embodiments according to the present invention have been described above, it will be obvious to those skilled in the art that the present invention can be embodied in other specific forms in addition to the embodiments described above without departing from the spirit or scope thereof. Therefore, the above-described embodiments are to be regarded as illustrative rather than restrictive, and thus, the present invention is not limited to the above description but may be modified within the scope of the appended claims and their equivalents.

## Claims

1. A brazing system for brazing an object to be bonded to a base material, the brazing system comprising:
a turntable provided with a reception part for receiving the base material and rotatable clockwise or counterclockwise;
a base material supply device for supplying the base material to the reception part;
a brazing filler metal supply device for supplying a brazing filler metal to an upper side of the base material;
a first heating device for bonding the brazing filler metal to the base material;
a bonding object supply device for supplying the object to be bonded to an upper side of the brazing filler metal bonded to the base material;
a second heating device which is in contact with opposite sides of the base material to fix the base material and is provided with electrodes for supplying electric current to the base material so as to bond the object to be bonded to the base material; and
a cooling device which comes into contact with the object to be bonded to cool the object to be bonded.

2. The brazing system according to claim 1, wherein the base material supply device includes:
a base material supply housing for storing the base material;
a first base material transfer part provided in the base material supply housing and moving the base material in a horizontal direction; and
a second base material transfer part for gripping the base material to seat it in the reception part.

3. The brazing system according to claim 1, wherein the brazing system further includes an inspection device located above the reception part and checking whether the base material is present in the reception part.

4. The brazing system according to claim 1, wherein the brazing filler metal supply device includes:
a brazing filler metal supply housing;
a first brazing filler metal transfer part provided in the brazing filler metal supply housing and moving a brazing filler metal base material having a first length in a horizontal direction;
a brazing filler metal providing part for cutting the brazing filler metal base material to provide the brazing filler metal having a second length smaller than the first length; and
a second brazing filler metal transfer part for gripping the brazing filler metal to seat it on the base material.

5. The brazing system according to claim 4, wherein the brazing filler metal supply device further includes a winding part around which the brazing filler metal base material is wound,
wherein the winding part is rotated so that the brazing filler metal base material is moved to the first brazing filler metal transfer part.

6. The brazing system according to claim 4, wherein the first brazing filler metal transfer part includes:
a first guide part for guiding the brazing filler metal base material while supporting the lower side thereof;
a second guide part for guiding the brazing filler metal base material while contacting the upper side thereof; and
a brazing filler metal driving part for providing driving force to move the brazing filler metal base material while contacting the brazing filler metal base material.

7. The brazing system according to claim 6, wherein as the brazing filler metal driving part moves in a vertical direction, the brazing filler metal driving part controls the movement of the brazing filler metal base material.

8. The brazing system according to claim 4, wherein the brazing filler metal providing part includes:
a cutting moving part connected to the brazing filler metal supply housing and reciprocating in a direction perpendicular to the direction in which the brazing filler metal base material is moved; and
a brazing filler metal cutting part connected to the cutting moving part and cutting the brazing filler metal base material,
wherein as the cutting moving part moves the brazing filler metal cutting part, the brazing filler metal cutting part can be adjacent to or away from the brazing filler metal base material.

9. The brazing system according to claim 4, wherein the second brazing filler metal transfer part includes:
a brazing filler metal rotating part provided between the base material and the brazing filler metal supply housing and rotating clockwise or counterclockwise; and
a brazing filler metal grip part connected to the brazing filler metal rotating part and gripping the brazing filler metal,
wherein the brazing filler metal grip part grips the brazing filler metal and seat it on the base material as the brazing filler metal rotating part rotates.

10. The brazing system according to claim 1, wherein the bonding object supply device includes:
a bonding object storage part that stores a plurality of bonding objects and is provided with a bonding object moving part for moving the plurality of bonding objects in a row;
a bonding object reception part for accommodating at least one of the plurality of bonding objects moved in a row from the bonding object moving part; and
a bonding object transfer part for gripping the bonding object in the bonding object reception part to seat it on the base material.

11. The brazing system according to claim 10, wherein the bonding object reception part includes:
a rotating plate having at least one accommodation groove corresponding to the bonding object and rotating clockwise or counterclockwise; and
a bonding object guide part surrounding a portion of the outer peripheral surface of the rotating plate.

12. The brazing system according to claim 11, wherein the bonding object guide part includes:
a first opening connected to the bonding object moving part and guiding the bonding object to be accommodated in the accommodation groove; and
a second opening for guiding the bonding object to be separated from the accommodation groove.

13. The brazing system according to claim 11, wherein the bonding object transfer part includes:
a bonding object rotating part provided between the base material and the bonding object guide part and rotating clockwise or counterclockwise; and
a bonding object grip part connected to the bonding object rotating part and gripping the bonding object,
wherein the bonding object grip part grips the bonding object and seat it on the base material as the bonding object rotating part rotates.

14. The brazing system according to claim 10, wherein the bonding object includes:
a first layer containing silver (Ag) and carbon (C); and
a second layer containing silver (Ag) and no carbon (C), and
the bonding object transfer part seats the bonding object on the base material so that the second layer faces the base material.

15. The brazing system according to claim 14, wherein the device for supplying the bonding object for brazing further includes a vision inspection device for checking the first layer by irradiating light toward the bonding object.

16. The brazing system according to claim 15, wherein a certain pattern is formed on one surface of the first layer of the bonding object, and
the vision inspection device checks whether the certain pattern is present.

17. The brazing system according to claim 1, wherein the second heating device includes:
a first fixing part capable of contacting one side of the base material and provided with a first electrode; and
a second fixing part capable of contacting the other side of the base material and provided with a second electrode electrically connected to the first electrode through the base material,
wherein the inside of the first fixing part and the second fixing part is provided with a first fluid passage through which fluid supplied from the outside moves, and a second fluid passage communicating with the first fluid passage to allow the fluid to flow and formed to surround the first fluid passage.

18. The brazing system according to claim 1, which further includes an electrode grinding device for grinding the electrode by moving the second heating device.

19. The brazing system according to claim 18, wherein the electrode grinding device includes:
a brazing transfer part for moving the second heating device in a horizontal direction; and
a grinding part disposed to be spaced apart from the second heating device and grinding the electrode of the second heating device as the second heating device is moved by the brazing transfer part.

20. The brazing system according to claim 19, wherein the brazing transfer part includes:
a guide rail; and
a driving part coupled to the second heating device and providing driving force so that the second heating device moves along the guide rail.

21. The brazing system according to claim 20, wherein the second heating device further includes a height adjustment part for adjusting the height of the electrode to correspond to the height of the grinding part.

22. The brazing system according to claim 20, wherein the electrode includes:
a first electrode contacting one side of the base material; and
a second electrode contacting the other side of the base material, and
the second heating device is moved along the guide rail so that the grinding part is disposed between the first electrode and the second electrode.

23. The brazing system according to claim 22, wherein the grinding part includes:
a first grinding part for grinding the first electrode; and
a second grinding part for grinding the second electrode, and
wherein the second heating device may include:
a first horizontal moving part for moving the first electrode in a horizontal direction so that the first electrode contacts the first grinding part; and
a second horizontal moving part for moving the second electrode in a horizontal direction so that the second electrode contacts the second grinding part.

24. The brazing system according to claim 19, wherein the grinding part is made of a cemented carbide material.

25. A brazing method for brazing an object to be bonded to a base material, the method including:
a base material supply step of supplying the base material to a reception part for receiving the base material;
a brazing filler metal supply step of supplying a brazing filler metal to the upper side of the base material;
a brazing filler metal heating step of bonding the brazing filler metal to the base metal;
a bonding object supply step of supplying the bonding object to an upper side of the brazing filler metal bonded to the base material;
a base material heating step of bonding the bonding object to the base material by supplying current to the base material; and
a cooling step of cooling the bonding object.

26. The brazing method according to claim 25, which further includes an electrode grinding step of grinding an electrode for heating the base material.
